# FASCICULE DE BREVET EUROPEEN

(11) **EP 0 676 583 B1**
(45) Date de publication et mention de la délivrance du brevet: **08.07.1998**
(21) Numéro de dépôt: 95400758.9
(22) Date de dépôt: 05.04.1995
(51) Int. Cl.: F21M 7/00

(54) **Boîtier de projecteur automobile à capot d'accès**
Scheinwerfergehäuse mit Zugangsabdeckkappe
Headlamp housing with access cover

(30) Priorité: 07.04.1994 FR 9404100
(43) Date de publication de la demande: 11.10.1995
(73) Titulaire: VALEO VISION, 93000 Bobigny (FR)
(72) Inventeur: Karwat, Christian, F-93300 Aubervilliers (FR)
(74) Mandataire: Martin, Jean-Jacques

(56) Documents cités:
- EP-A- 0 300 482

## Description

La présente invention est relative aux boîtiers de projecteurs automobiles du type à capot d'accès.

Un tel boîtier abrite classiquement au moins une lampe et un réflecteur et est fermé en sa partie avant par une glace. Il présente une ouverture d'accès, généralement située au niveau de son fond, permettant notamment à un opérateur de procéder au changement d'une lampe à l'intérieur du projecteur. Cette ouverture est fermée par un capot d'accès. Des moyens d'étanchéité sont prévus entre le capot et le bord de l'ouverture.

Notamment, dans EP-A-0 300 482, il est proposé une structure de boîtier dans laquelle un joint 16-65 est interposé entre le bord de l'ouverture du boîtier et le capot formant cette ouverture.

Il se pose cependant pour la plupart des boîtiers actuels un problème de tenue dans le temps de l'étanchéité.

Un but de l'invention est de résoudre ce problème.

Elle propose à cet effet un boîtier de projecteur de véhicule automobile comportant un corps recevant au moins un réflecteur et une lampe, ainsi qu'un capot d'accès amovible pour l'obturation d'une ouverture d'accès que présente ledit corps, un joint d'étanchéité annulaire étant interposé entre ledit capot et une portée qui entoure ladite ouverture et contre laquelle ledit' joint est écrasé, caractérisé en ce que ladite portée s'étend de façon oblique par rapport à l'axe de l'ouverture et du joint d'étanchéité et définit par rapport au col un décrochement qui coopère avec une protubérance d'au moins une patte élastique du capot pour verrouiller le capot sur l'ouverture.

L'invention concerne également un projecteur comportant un tel boîtier.

Dans EP-A-0 300 482, le joint 16-65 présenté n'est pas écrasé contre une portée oblique de l'ouverture.

La portée oblique qui est représentée est ménagée sur la paroi intérieure du capot.

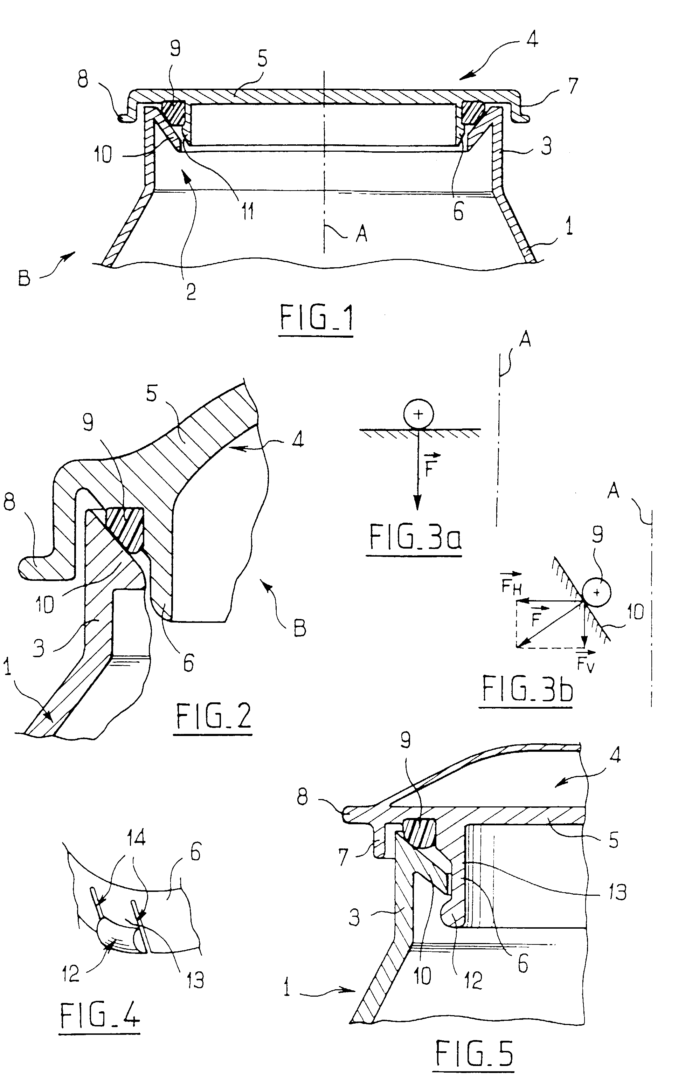

D'autres caractéristiques et avantages de l'invention ressortiront encore de la description qui suit. Cette description est purement illustrative et non limitative, elle doit être lue en regard des dessins annexés sur lesquels :
. la figure 1 est une vue en coupe avec arraché d'un boîtier conforme à l'invention ;
. la figure 2 est une vue agrandie d'un détail des moyens d'étanchéité d'un autre boîtier conforme à l'invention.
. les figures 3a et 3b illustrent la décomposition des forces du contact d'étanchéité respectivement sur un boîtier de l'art antérieur et sur les boîtiers de l'invention ;
. la figure 4 est une vue en perspective avec arraché d'un détail de moyens de fixation du capot d'accès d'un autre boîtier conforme à l'invention ;
. la figure 5 est une vue en coupe agrandie avec arraché d'un détail des moyens de fixation et d'étanchéité d'un autre boîtier conforme à l'invention, les moyens de fixation étant analogues à ceux de la figure 4.

Sur la figure 1, on a plus particulièrement représenté le fond 1 du corps d'un boîtier B de projecteur de véhicule automobile. Ce corps reçoit en son intérieur un réflecteur, ainsi qu'au moins une lampe, qui n'ont pas été représentés. Il est fermé en sa partie avant par une glace.

Le fond 1 présente une ouverture d'accès 2 qui est, dans l'exemple ici décrit, de contour circulaire.

L'ouverture 2 est entourée par un col 3 de forme de révolution s'étendant à partir du fond 1 vers l'extérieur. L'axe de l'ouverture 2 et du col 3 a été référencé par A.

Le boîtier B comporte également un capot 4, qui ferme l'ouverture 2.

Ce capot 4 est destiné à chapeauter le col 3 et présente un fond 5 et une jupe de précentrage cylindrique 6 qui s'étend à partir dudit fond 5 et qui est destinée à s'engager à l'intérieur du col 3. Ce fond 5 est bordé périphériquement par un retour 7 destiné à entourer le col 3 vers sa tranche d'extrémité. Ce retour 7 se termine lui-même par une saillie annulaire 8 qui constitue un moyen brise-jet.

Le capot 4 et le corps du boîtier sont moulés en des matériaux thermoplastiques. Avantageusement, le capot 4 et ce corps 1 peuvent être moulés d'une pièce et reliés entre eux par une languette assurant l'imperdabilité du boîtier et du capot.

L'étanchéité entre le capot 4 et le col 3 est assurée par un joint d'étanchéité rapporté torique 9 en élastomère.

Le joint 9 ceinture la jupe de précentrage 6, sur laquelle il est maintenu par serrage. La jupe 6 comporte en outre une protubérance extérieure annulaire 11 qui la termine à son extrémité opposée au fond 5 et qui définit avec ledit fond 5 le logement dans lequel le joint torique 9 se positionne.

Conformément à l'invention, le col 3 présente une portée tronconique 10 s'évasant de l'intérieur vers l'extérieur du boîtier et sur laquelle le joint torique 9 vient en appui. Cette portée 10 est par exemple définie par une jupe tronconique qui prolonge en retour le col 3 (figure 1) ; elle peut être également constituée par un renfort intérieur que présente le col 3 à son extrémité (figure 2).

Sur les boîtiers de l'art antérieur, l'étanchéité est réalisée par contact sur un plan. Dans le cas d'un joint torique ou d'une lèvre annulaire, la contrainte (effort F) subie par la lèvre ou le joint est, ainsi qu'on l'a illustré sur la figure 3a, principalement axiale. Une telle contrainte axiale engendre généralement un fluage du capot lors des tests de vieillissement thermique et conduit à la disparition de la fonction d'étanchéité.

Avec l'invention, l'effort F exercé sur le joint 9 se répartit en un effort axial FV et en un effort radial FH (figure 3b). Les contraintes axiales sont donc diminuées.

En variante, le joint torique peut être un joint coulé à peau de surface à cellules fermées imperméables à l'eau.

Les figures 4 et 5 illustrent un mode possible de fixation du capot 4 sur le col 3. La jupe 6 présente deux pattes élastiques 13 diamétralement opposées et portant chacune une protubérance 12. Une telle patte 13 est définie sur cette jupe 6 par deux fentes 14 s'étendant à partir de la tranche de la jupe 6, vers le fond 5.

Lorsque le capot 4 est présenté sur l'ouverture 2, la protubérance 12 est guidée sur la portée tronconique 10 qui la repousse. Une fois le capot 4 en place sur l'ouverture 2, la patte 13 rabat élastiquement cette protubérance 12 en dessous de la portée tronconique 10. Le capot 4 est ainsi verrouillé sur l'ouverture 2.

D'autres moyens de fixation sont possibles. La fixation du capot peut notamment être réalisée par des baïonnettes intérieures placées sur la jupe de précentrage du capot, par un ressort extérieur venant plaquer le capot, ou encore par des charnières inférieures et un verrouillage en partie supérieure.

## Revendications

1. Boîtier de projecteur de véhicule automobile comportant un corps (1) recevant au moins un réflecteur et une lampe, ainsi qu'un capot d'accès (4) amovible pour l'obturation d'une ouverture d'accès (2) que présente ledit corps (1), un joint d'étanchéité annulaire (9) étant interposé entre ledit capot (4) et une portée (10) qui entoure ladite ouverture (2) et contre laquelle ledit joint (9) est écrasé, caractérisé en ce que ladite portée (10) s'étend de façon oblique par rapport à l'axe (A) de l'ouverture (2) et du joint d'étanchéité (9) et définit par rapport au col (3) un décrochement qui coopère avec une protubérance (12) d'au moins une patte élastique (13) du capot (4) pour verrouiller le capot (4) sur l'ouverture (2).

2. Boîtier selon la revendication 1, caractérisé en ce que ladite portée (10) est tronconique.

3. Boîtier selon l'une des revendications 1 ou 2, caractérisé en ce que la portée (10) prolonge en retour un col (3) qui entoure l'ouverture (2).

4. Boîtier selon l'une des revendications 1 ou 2, caractérisé en ce que la portée (10) est une surface d'extrémité d'un renfort qui termine un col (3) qui entoure l'ouverture (2).

5. Boîtier selon l'une des revendications précédentes, caractérisé en ce que le capot (4) présente une jupe de précentrage (6).

6. Boîtier selon la revendication 5, caractérisé en ce que la jupe du précentrage (6) présente deux fentes (14) s'étendant à partir de sa tranche, la portion de la jupe (6) entre ces deux fentes (44) constituant une patte (13) élastique de verrouillage.

7. Boîtier selon la revendication 6, caractérisé en ce que le joint d'étanchéité est un joint torique (9) rapporté sur la jupe de précentrage (6).

8. Boîtier selon l'une des revendications 1 à 6, caractérisé en ce que le joint d'étanchéité est un joint coulé à peau de surface à cellules fermées imperméables à l'eau.

9. Projecteur de véhicule automobile comportant un boîtier (B) selon l'une des revendications précédentes.

## Claims

1. A housing for a motor vehicle headlamp comprising a body (1) receiving at least one reflector and a lamp, and also a removable access cap (4) for closing an access aperture (2) which the said body (1) has, an annular weatherstrip (9) being placed between the said cap (4) and a bearing surface (10) which surrounds the said aperture (2) and against which the said weatherstrip (9) is crushed, **characterised in that** the said bearing surface (10) extends obliquely in relation to the axis (A) of the aperture (2) and of the weatherstrip (9) and defines in relation to the neck (3) a set-back portion which cooperates with a protuberance (12) of at least one resilient lug (13) of the cap (4) to lock the cap (4) onto the aperture (2).

2. A housing according to Claim 1,
**characterised in that** the said bearing surface (10) is tapered.

3. A housing according to one of Claims 1 or 2,
**characterised in that** the bearing surface (10) extends, as a return, a neck (3) which surrounds the aperture (2).

4. A housing according to one of Claims 1 or 2,
**characterised in that** the bearing surface (10) is an end surface of a reinforcing piece which is the end of a neck (3) surrounding the aperture (2).

5. A housing according to one of the preceding Claims,
**characterised in that** the cap (4) has a precentring skirt (6).

6. A housing according to Claim 5,
**characterised in that** the precentring skirt (6) has two slits (14) extending from its edge, the portion of the skirt (6) between these two slits (44) forming a resilient locking lug (13).

7. A housing according to Claim 6,
**characterised in that** the weatherstrip is an O-ring seal (9) attached to the precentring skirt (6).

8. A housing according to one of Claims 1 to 6,
**characterised in that** the weatherstrip is a grouted seal having a surface skin with watertight closed cells.

9. A motor vehicle headlamp comprising a housing (B) as specified by one of the preceding Claims.

## Patentansprüche

1. Kraftfahrzeugscheinwerfergehäuse, umfassend einen Körper (1), der mindestens einen Reflektor und eine Lampe aufnimmt, sowie eine abnehmbare Zugangsabdeckkappe (4) für den Verschluß einer Zugangsöffnung (2), die der besagte Körper (1) aufweist, wobei eine ringförmige Dichtung (9) zwischen der besagten Abdeckkappe (4) und einer Sitzfläche (10) eingefügt ist, die die besagte öffnung (2) umgibt und an der die besagte Dichtung (9) zusammengedrückt wird , **dadurch gekennzeichnet**, daß sich die besagte Sitzfläche (10) schräg im Verhältnis zur Achse (A) der Öffnung (2) und der Dichtung (9) erstreckt und im Verhältnis zum Hals (3) einen Absatz definiert, der mit einer Ausstülpung (12) mindestens eines elastischen Ansatzes (13) der Abdeckkappe (4) zusammenwirkt, um die Abdeckkappe (4) auf der Öffnung zu sichern.

2. Gehäuse nach Anspruch 1 , **dadurch gekennzeichnet**, daß die besagte Sitzfläche (10) kegelstumpfartig ausgebildet ist.

3. Gehäuse nach einem der Ansprüche 1 oder 2 , **dadurch gekennzeichnet**, daß die Sitzfläche (10) zurückspringend einen Hals (3) verlängert, der die Öffnung (2) umgibt.

4. Gehäuse nach einem der Ansprüche 1 oder 2 , **dadurch gekennzeichnet**, daß die Sitzfläche (10) eine Abschlußfläche einer Verstärkung ist, die einen Hals (3) abschließt, der die Öffnung (2) umgibt.

5. Gehäuse nach einem der vorangehenden Ansprüche, **dadurch gekennzeichnet**, daß die Abdeckkappe (4) eine Vorzentriereinfassung (6) aufweist.

6. Gehäuse nach Anspruch 5 , **dadurch gekennzeichnet**, daß die Vorzentriereinfassung (6) zwei Schlitze (14) aufweist, die sich von ihrer Kante aus erstrecken, wobei der Abschnitt der Einfassung (6) zwischen diesen beiden Schlitzen (14) einen elastischen Sicherungsansatz (13) bildet.

7. Gehäuse nach Anspruch 6 , **dadurch gekennzeichnet**, daß die Dichtung ein an der Vorzentriereinfassung (6) angefügter Runddichtring (9) ist.

8. Gehäuse nach einem der Ansprüche 1 bis 6 , **dadurch gekennzeichnet**, daß die Dichtung eine Gießdichtung mit einer Oberflächenhaut mit wasserundurchlässigen geschlossenen Zellen ist.

9. Kraftfahrzeugscheinwerfer, der ein Gehäuse (B) nach einem der vorangehenden Ansprüche umfaßt.
